(19) Europäisches Patentamt
European Patent Office
Office européen des brevets

(11) **EP 2 062 665 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***B22C 1/18*** *(2006.01)* *A61C 5/10* *(2006.01)*
*A61C 13/20* *(2006.01)*

(21) Anmeldenummer: **07021398.8**

(22) Anmeldetag: **02.11.2007**

(54) **Keramische Einbettmasse zur Herstellung einer Giessform sowie damit verbundene Herstellungsverfahren**

Ceramic embedding compound for creating a casting mould and related production methods

Matière d’enrobage céramique destinée à la fabrication d’un moule de coulée et procédés de fabrication apparentés

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**27.05.2009 Patentblatt 2009/22**

(73) Patentinhaber: **SHERA-Werkstofftechnologie GmbH & Co.KG**
**49448 Lemförde (DE)**

(72) Erfinder:
- **Nowack, Norbert, Prof. Dr.-Ing.**
  **49448 Hüde (Dümmer See) (DE)**
- **Igelmann, Anke, Dr. rer.nat.**
  **49401 Damme (DE)**

(74) Vertreter: **Fritz & Brandenburg**
**Patentanwälte**
**Postfach 45 04 20**
**50933 Köln (DE)**

(56) Entgegenhaltungen:
**EP-A- 0 480 171 EP-A- 1 579 934**
**EP-A- 1 611 977 DE-A1- 10 346 775**
**US-A- 2 680 890 US-A- 5 180 427**

- **SCRIMGEOUR ET AL: "P solid-state MAS-NMR spectroscopy of the compounds that form in phosphate-bonded dental casting investment materials during setting" DENTAL MATERIALS, ELSEVIER, Bd. 23, Nr. 8, 16. Juni 2007 (2007-06-16), Seiten 934-943, XP022119231 ISSN: 0109-5641**
- **HSU H C ET AL: "Evaluation of different bonded investments for dental titanium casting" JOURNAL OF MATERIALS SCIENCE: MATERIALS IN MEDICINE, KLUWER ACADEMIC PUBLISHERS, BO, Bd. 18, Nr. 4, 1. April 2007 (2007-04-01), Seiten 605-609, XP019503779 ISSN: 1573-4838**
- **SCRIMGEOUR ET AL: "The determination of phosphorus containing compounds in dental casting investment products by <31>P solid-state MAS-NMR spectroscopy" DENTAL MATERIALS, ELSEVIER, Bd. 23, Nr. 4, 22. Februar 2007 (2007-02-22), Seiten 415-424, XP005924730 ISSN: 0109-5641**

EP 2 062 665 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine keramische Einbettmasse zur Herstellung einer Gießform, die zur Kompensation der Volumenkontraktion eines in die Gießform einzufüllenden Gusswerkstoffs eine Abbindeexpansion aufweist, hergestellt aus einer Keramikpartikelmischung, einem Bindemittel und einer Anmischflüssigkeit. Die Erfindung betrifft weiterhin ein Verfahren zur Herstellung einer solchen keramischen Einbettmasse sowie ein Verfahren zur Herstellung von Gussteilen, insbesondere filigranen Präzisionsgussteilen für Anwendungen in der Medizintechnik, die man durch Einfüllen eines Gusswerkstoffs in eine Gießform herstellt, welche aus einer keramischen Einbettmasse der vorgenannten Art hergestellt wurde.

Im medizinischen Bereich, insbesondere in der Dentaltechnik (zahnärztliche Prothetik) werden individuell anzufertigende Prothesen üblicherweise aus Metallegierungen, etwa auf der Basis Gold-Silber( AuAg), Titan (Ti), Silber-Palladium (AgPd), Nickel-Chrom-Molybdän (NiCrMo), Cobalt-Chrom-Molybdän (CoCrMo), Cobalt-Chrom-Molybdän-Wolfram (CoCrMoW), Eisen-Chrom-Molybdän (FeCrMo) oder aus glaskeramischen Werkstoffen gegossen. Die hierzu verwendeten Gießformen bestehen aus einer keramischen Einbettmasse, die mit Hilfe eines dem zu rekonstruierenden Körperteil entsprechenden Wachsmodells gewonnen wird (Abdrucktechnik). Dies geschieht dadurch, dass ein aus einer Keramikpartikelmischung und einem Bindemittel bestehender Brei mit einer Anmischflüssigkeit angerührt und damit wird das Wachsmodell ummantelt. Nach etwa einigen Minuten erhält die potentielle Gießform eine feste Konsistenz und die Temperatur steigt infolge einer chemischen Abbindereaktion beispielsweise auf rd. 35 °C. Die Temperatur kann durch die voranschreitende Abbindereaktion kurzfristig beispielsweise bis auf 90 °C ansteigen und die sog. grüne Gießform wird zunehmend fest (kantenstabil). Die Gießform wird auf eine Temperatur erwärmt, bei der das Wachs des Wachsmodells herausfließt. Um die erforderlichen Gießparameter, beispielsweise die erhöhte Kantenstabilität und eine bestimmte Ausdehnung des gebildeten Hohlraumes (thermische Expansion) zu erreichen, wird die Gießform vor dem Einbringen des Gusswerkstoffes auf Temperaturen von bis zu 1000 °C vorgewärmt.

Während des Abkühlens ist der Gießvorgang durch eine Volumenkontraktion des Gusswerkstoffes gekennzeichnet. Bereits im flüssigen Zustand tritt eine Schrumpfung ein, die beim Erstarren in eine Schwindung übergeht. Um eine möglichst geringe Abweichung des Gussteiles von dem dem zu rekonstruierenden Körperteil entsprechenden Wachsmodell sicherzustellen, ist es bekannt, die Volumenkontraktion des Gusswerkstoffes durch eine Expansion der die Gießform bildenden Einbettmasse zu kompensieren.

Die hohen Anforderungen hinsichtlich geometrischer Parameter an einen Präzisionsguss sind am Beispiel einer filigranen Zahnkrone (ca. 10 mm Objekt mit Wandstärken im Bereich 0,2 mm bis 2 mm) in der **Figur 1** dargestellt worden (schematische Darstellung). Erkennbar ist, dass zwischen dem Zahnstumpf (ein lebendes Organ) und dem Gussteil nur geringe Spalte existieren dürfen. Sind die Spalte zu klein, so ist Passung zu eng und die Krone kann nicht aufsetzt werden.

Der klinische Randspalt a muss kleiner als 20 $\mu$m sein, so dass ein schlüssiger Verbund zwischen Krone-Klebstoff-Zahnstumpf entsteht. Der Spalt darf nicht zu weit sein, damit die Krone sich praktisch nicht verschieben lässt und das Eindringen von Bakterien in Spalte weitgehend verhindert werden soll. Die Spalte b und c müssen aber groß genug bleiben, so dass noch eine vollständige Benetzung des Zahnstumpfes und der Innenfläche der Krone mit dem Klebstoff vorhanden ist, aber die Stärke, wie angegeben, gering ist. Die Krone soll in einem leichten Gleitvorgang über den Zahnstumpf geschoben werden, d.h. sie soll vom Zahnarzt behinderungsfrei eingesetzt werden können. Dies setzt einen Präzisionsguss von Kronen und Brücken voraus. Brücken (zur Überbrückungen von zwei Zahnstümpfen) setzen weiterhin präzise Abstände zwischen den Verankerungskronen (zwei Zahnstümpfe) voraus. Stimmen die Überbrükkungsgeometrien nicht, so sind die Klebestellen nicht tolerabel unterschiedlich stark. Durch den Aufbau von Verformungen können mechanische Spannungen entstehen, die zu starken Schmerzreizungen im Kieferbereich eines Patienten führen.

Ähnliche Anforderungen werden an die Herstellung den Gussteilen im Bereich der Teleskope und Geschiebe in der zahnärztlichen Prothetik gestellt.

Geringere Expansionswerte, d. h. geringere Kompensation der Volumenschrumpfung müssen bei der Herstellung von herausnehmbaren Zahnersatz (sog. Modellgusstechnik) eingehalten werden. Zur Herstellung wird erst eine Grundplatte aus der Einbettmasse gewonnen, die den Kieferbereich abbildet (aus einem Abdruck am Patienten entstanden). Hier wird eine relativ hohe Abbindeexpansion gefordert. Auf dieser Grundplatte wird das Wachsmodell (Zähne und Verbindungen) modelliert. Darüber wird ein Einbettmasse-Brei mit geringerer Expansion gegossen, der nach wenigen Minuten fest wird. Diese "grüne" Gießform wird erhitzt und das flüssige Wachs tritt aus. Es entsteht ein Hohlraum, die Gießform. Wegen der unterschiedlichen Expansionswerte (über die Wahl der Anmischflüssigkeit der zu "steuernde" Einbettmasse) entsteht eine geschlossene Gießform ohne Spalte.

Da in der medizinischen Technik sehr unterschiedliche Gusslegierungen verwendet werden, müssen die Einbettmassen auch unterschiedlich einstellbare Expansionswerte besitzen. Schon innerhalb eines Legierungssystems gibt es Unterschiede, da die Legierungen des gleichen Legierungstypus abweichende Zusammensetzungen (z. B. durch Mikrolegierungsbestandteile) besitzen. Eine Regel besagt, dass je höher der Liquidusbereich einer flüssigen Legierung liegt, desto höher ist die Volumenkontraktion und desto stärker muss diese kompensiert werden.

Die Gesamtexpansion der Einbettmasse setzt sich dabei aus einer Abbindeexpansion (hiermit befasst sich die vorliegende Erfindung) während des Abbindens des Breis und einer thermischen Expansion beim Erwärmen der Gießform zusammen. Eine hohe thermische Expansion wird durch die Wahl der feuerfesten Oxide der Einbettmasse hergestellt und ist nicht Gegenstand der vorliegenden Erfindung.

## (B) Stand der Technik

In der Technik wird zur Herstellung einer Gießform aus feuerfesten Oxiden (Partikelmischung aus $SiO_2$-Modifikationen wie α-Quarz, α-Cristobalit, amorphes $SiO_2$, Erdalkalisilikate, Zirkon(IV)-oxid und Zirkonate, Aluminiumoxide, Spinelle und Aluminate etc.) reaktives MgO und Ammoniumdihydrogenphosphat ($NH_4H_2PO_4$) beigemischt. MgO und $NH_4H_2PO_4$ bilden ein Bindersystem. Beim Anrühren einer Mischung von Wasser mit MgO+ $NH_4H_2PO_4$ (Binder) und den feuerfesten Oxiden (Einbettmassenbrei) kommt es zu einer zeitlich verzögerten Reaktion (exotherme Reaktion, Erwärmung bis 90 °C durch Reaktion zwischen MgO + $NH_4H_2PO_4$ + $H_2O$) und der Einbettmassenbrei wird nach wenigen Minuten fest (Phosphatzement). Um eine höhere Abbindeexpansion zu erzielen, wird die Keramikmischung nicht nur mit Wasser angerührt, denn dies führt zu einer niedrigen Abbindeexpansion, die aber ein wesentlicher Bestandteil der Gesamtexpansion ist. Sondern man rührt den Einbettmassenbrei mit einer kolloidalen Kieselsäurelösung. (Stand der Technik) an. Die Kieselsäurelösungen bestehen aus $SiO_2$-Partikeln mit Partikeldurchmessern zwischen 0,003 μm bis 0,06 μm (spezifische Oberfläche zwischen 100 $m^2/g$ bis 500 $m^2/g$). Die Kieselsäurepartikel werden beim Anrühren mit den oxidkeramischen Partikeln (Pulvermischung mit dem Bindemittel MgO + $NH_4H_2PO_4$) in ein Gel überführt (diverse pH-Wertänderungen und Oberflächenreaktion durch Partikel). Dieses Gel besitzt einen gewissen Quelldruck und erzeugt so die gewünschte Abbindeexpansion. Die Abbindeexpansion ist durch die Wahl der Kieselsäure-Konzentration im Sol einstellbar (d. h. steuerbar). So liegt z. B. bei Verwendung einer 40 % igen Kieselsäure- Sollösung die Abbindeexpansion bei rd. + 2 % (nur eine Größenordnung bezogen auf eine handelsübliche Einbettmasse).

## (C) Das bestehende Problem bei der Verwendung von Kieselsäuresolen in der Feingusstechnik zur Herstellung filigraner Gussteile

### *Problem (a)*

Die verwendeten Kieselsäuresol-Lösungen (Konzentrate bis 45 % $SiO_2$) sind metastabile Systeme. Im unbenutzten Zustand sind sie als Sol nur einige Wochen haltbar. Verunreinigungen, die in die Behälter gelangen verursachen Koagulation der $SiO_2$-Nanopartikel und das Sol wandelt sich rasch in Gel um. Im Gelzustand kann die "Kieselsäurelösung" nicht mehr verwendet werden. Auch pH-Wertänderungen der schwach alkalischen Lösungen (z.B. stabilisiert auf pH=10), z.B. durch $CO_2$ aus der Luft verringern die Stabilität enorm. Bei pH=7 verringert sich die Stabilität auf Tagebereiche.

### *Problem (b)*

Diese Kieselsäuresol-Lösungen sind bei höheren und niedrigen Temperaturen nicht stabil. Temperaturen unter 5 °C zerstören das Sol augenblicklich (frostempfindliches Produkt). Dies ist in wirtschaftlicher Hinsicht ein großes Problem. Im Winter lassen sich derartige Lösungen nicht verteilen (=nicht verkaufen), da durch eine zu große Kälteeinwirkung die Sole den Empfänger (Abnehmer) im zerstörten Zustand erreichen. Der zerstörte Zustand ist dann das gebildete Gel. Dies ist eine große Erschwernis für den Export in nordische Länder. Auch südliche Länder können von Herstellerbetrieben in nördlichen Gebieten im Winter nicht beliefert werden.

### *Problem (c)*

Ebenso sind derartige Kieselsäuresol-Lösungen bei Temperaturen von beispielsweise über 40 °C nicht haltbar: Sol-Gel- Umwandlung siehe Punkt (b). Derartige instabile Dispersionen koagulieren. Die Koagulation wird durch starke Schüttelbewegungen gefördert.

### *Problem (d)*

Kieselsäuresol-Lösungen besitzen bei der Herstellung keine reproduzierbar spezifischen Oberflächen. Hiervon sind aber die Abbindeexpansionswerte abhängig. Jede Charge muss deshalb in Bezug auf die Einbettmasse überprüft und eingestellt werden. Dies bedeutet einen erhöhten Aufwand an Messtechnik und Probegießversuche bevor die Kieselsäuresol-Lösung verkauft werden kann.

Aus den aufgezählten Problemen (a) bis (d) ergibt sich das Anliegen der vorliegenden Erfindung, nämlich das Auffinden eines Ersatzes für die Kieselsäuresol-Lösung und somit Überwindung der Probleme (a) bis (d), wobei zugleich eine kostengünstige Lösung gefunden werden soll.

Die Aufgabe der vorliegenden Erfindung besteht darin, eine keramische Einbettmasse zur Herstellung einer Gießform der eingangs genannten Gattung zu schaffen, mittels derer sich eine gute Steuerung der beim Abbinden auftretenden Expansion erzielen lässt. Die für die Herstellung der keramischen Einbettmasse verwendete Anmischflüssigkeit sollte keine kolloidalen Bestandteile enthalten, d.h. sie soll bei äußeren Temperaturschwankungen haltbar sein, lagerstabil sein, bevorzugt durch Verdünnungsvorgang in den Abbindeexpansionswerten variabel (steuerbar) sein und auch kostengünstig sein.

Aufgabe der Erfindung ist es weiterhin, ein Verfahren zur Herstellung einer derartigen keramischen Einbettmasse zur Verfügung zu stellen sowie ein Verfahren zur Herstellung von filigranen Präzisionsgussteilen, insbesondere für Anwendungen in der Medizintechnik, die man durch Einfüllen eines Gusswerkstoffs in eine Gießform herstellt, welche aus einer keramischen Einbettmasse mit den vorgenannten Eigenschaften hergestellt wurde.

Die Lösung dieser Aufgabe liefert eine keramische Einbettmasse der eingangs genannten Gattung mit den kennzeichnenden Merkmalen des Hauptanspruchs bzw. ein Verfahren zur Herstellung einer solchen keramischen Einbettmasse mit den Merkmalen des Anspruchs 8 bzw. ein Verfahren zur Herstellung von filigranen Präzisionsgussteilen mit den Merkmalen des Anspruchs 14.

**<u>(D) Erfinderidee und Grundlagenuntersuchungen zur Substitution der Kieselsäure-Sollösungen</u>**

Bei der Abbindereaktion, die zur Abbindeexpansion (Quelldruck) der grünen Gießform führt ging man bisher davon aus, dass sich gemäß der Reaktionsgleichung

$$MgO + NH_4H_2PO_4 + 5H_2O \rightarrow Mg(NH_4)PO_4 \cdot 6H_2O$$

die schwerlösliche kristalline Verbindung $Mg(NH_4)PO_4 \cdot 6H_2O$ bildet, die eine Volumenzunahme verursacht.

Diese Annahme ist falsch, wie die Untersuchungen der Erfinder ergaben.

Dazu die folgenden Ausführungen:

Die kristalline Verbindung $Mg(NH_4)PO_4 \cdot 6H_2O$ (Struvit) zersetzt sich beim Erhitzen in charakteristischer Weise unter Abgabe von gasförmigem $NH_3$ (118 °C) und Wasser (347 °C und 556 °C). In **<u>Figur 3</u>** sind die Ergebnisse der Differential-Thermo-Gravimetrie (DTG) von $Mg(NH_4)PO_4 \cdot 6H_2O$ (Struvit) dargestellt worden.

Ein Vergleich mit einer DTG-Aufnahme von einer Einbettmasse, die mit einer hochprozentigen Kieselsäuresollösung hergestellt wurde (siehe **<u>Figur 2</u>**) zeigt deutlich, dass sich beim Abbinden der Einbettmasse kein kristallines Magnesium-ammonium-phosphat $Mg(NH_4)PO_4 \cdot 6H_2O$ (Struvit) gebildet hat. Bei 248 °C wird die Einbettmasse in einem Schritt zersetzt.

Aus den Ergebnissen der Arbeiten der Erfinder im Rahmen der vorliegenden Erfindung wurde die Erklärung dieses Sachverhaltens erarbeitet. Es bilden sich nämlich keine kristallinen Binderstoffe, sondern es bilden sich Silico-Phosphat-Gele. Bekannt ist, dass das Magnesium-Ammonium-Phosphat, wie bei der Bildung von fast allen schwerlöslichen Verbindungen, zuerst im Primärprozeß ein Gel bildet. Durch hochauflösende infrarotspektroskopische Messungen (FTIR) konnte nachgewiesen werden, dass der Binder keine kristallinen Stoffe, wie zum Beispiel $Mg(OH)_2$ (=Brucit), bildet. Die Gele wandeln sich in einem späteren Zeitschritt zu kristallinen Stoffen um. Die Kieselsäure des Sols blockiert die Umwandlung in eine kristalline Struktur (Schutzkolloid) und wird in das Phosphat-Gel ("Silico-Phosphat-Gel") integriert. Diese Gele bilden ein polymeres anorganisches Netzwerk der Art .....X-O-Y-O-.... (mit X,Y=Si,P) mit Brückensauerstoffatomen zwischen X und Y, so dass ein polymeres ungeordnetes dreidimensionales Netzwerk entsteht. In dieses Netzwerk sind Wassermoleküle (Wasserstoffbrückenbindungen) und Kationen ($Mg^{2+}$, $NH_4^+$) eingelagert. Die Kationen sind hydratisiert und sind mit endständigen Sauerstoffatomen der Gruppen $-X-O^-$ oder $Y-O^-$ verbunden. Die Bildung dieses Gels erzeugt den gewünschten Quelldruck und die damit einhergehende Abbindeexpansion. Bei der Gelbildung findet eine Wärmeentwicklung statt, so dass in der "grünen Gießform" ein Temperaturanstieg bis auf 80 °C stattfindet. Ein zu hoher Temperaturanstieg (über 90 °C) allerdings zerstört das Gel, so dass die Abbindeexpansion wieder verringert wird.

Die Erfinder suchten daher ein schutzkolloidales System und Bedingungen für die Bildung desselben, so dass damit ein Phosphat-Gel gebildet wird. Bekannt ist, dass man hierfür die Ionenfeldstärke (=Aktivität) herabsetzen muss. Dies gelingt durch eine Absenkung der Dielektrizitätskonstanten durch die Verwendung von organischen Lösungsmitteln und einem schutzkolloidalen System, die sich gut mit Wasser mischen lassen.

Weiterhin benötigt man ein Additiv, dass die Dispergierbarkeit der Keramikpartikel in einem Einbettmassenbrei fördert. Das Abbinden der Einbettmasse zur "grünen Gießform" sollte innerhalb von wenigen Minuten erfolgen und der Abbindeexpansionsvorgang sollte nach ca. 1 h nahezu abgeschlossen sein. Durch die herbei geführte erfindungsgemäße Gelbildung sollte ebenfalls der Anstieg der Temperatur insoweit begrenzt werden, dass die Gelbildung nicht gestört wird, d.h. dass keine kristallinen Produkte entstehen.

Die (linearen) thermischen Expansionswerte (Dilatometermessung) der keramischen Einbettmassen alleine, die die Volumenexpansion (die Volumenänderung ist der dreifache Wert der linearen Expansionsmessung) messtechnisch beschreiben, liegen bei bis zu maximal +1,2 %. Die thermische Expansion ist zur Kompensation der erwähnten Volumenkontraktion allerdings nicht ausreichend. Die Kontraktionswerte einer Legierung, je nachdem um welche Legierung es sich handelt, beim Abkühlen auf Raumtemperatur, liegen zwischen - 4 bis -1,5 %.

Prinzipiell gilt für alle Expansionswerte:

Längenänderung $\Delta l$ eines Einbettmassen-Keramikteiles bezogen auf die Anfangslänge $l_o$, prozentuale Angabe.

$$\text{Abbindeexpansion in \%} = \frac{\Delta l}{l_0} \cdot 100$$

wobei $\Delta l$ die gemessene Längenänderung (= Funktion der Zeit) eines Probenkörpers während des Abbindens der erstarrenden Einbettmasse ist, bezogen auf die Anfangslänge $l_o$ des Probenkörpers.
Beim Abbinden erwärmt sich der Probenkörper bis auf rd. 90 °C. Die damit verbundene thermische Ausdehnung beträgt maximal 0,02 % und ist vernachlässigbar klein.

Im Gegensatz dazu ist die thermische Expansion (nicht Gegenstand dieser Erfindung) ein reiner Temperatureffekt. Bei der thermischen Expansionsmessung wird $\Delta l$ (= Funktion der Temperatur) auf $l_o$ (=Länge bei 20 °C) eines Probenkörpers bezogen. $\Delta l$ ist die zu messende temperaturabhängige Längenänderung eines Probenkörpers.

Die Abbindeexpansion ist die Längenänderung $\Delta l$ während der Erstarrung eines (nahezu festen, nahezu bei Raumtemperatur) Probenkörpers, der anfänglich aus einem Partikelbrei besteht, durch eine chemische Reaktion bezogen auf die Anfangslänge $l_o$ eines Probenkörpers. Die Abbindereaktion ist zeitabhängig und abhängig von komplexen topochemischen Reaktionen an Kristalloberflächen der oxidkeramischen Partikel. Durch die Bildung von Verbindungen, ähnlich wie beim Abbinden von Zement, kann eine Volumenänderung (=Abbindeexpansion) eintreten.

Die vorliegende Erfindung betrifft den Fall der "Abbindeexpansion" und die gezielte Änderung der "Abbindeexpansion" unter Verwendung einer erfindungsgemäßen Anmischflüssigkeit einschließlich der damit verbundenen Verfahren.

Erfindungsgemäß ist vorgesehen, dass die Anmischflüssigkeit wenigstens einen Kolloidbildner und/oder Gelbildner, ein Lösungsmittel, sowie wenigstens ein Alkalipolyphosphat enthält.

Erfindungsgemäß ist vorzugsweise als Kolloidbildner und/oder Gelbildner wenigstens eine ungesättigte Fettsäure vorgesehen. Besonders bevorzugt ist es, dass die Anmischflüssigkeit als Kolloidbildner und Gelbildner wenigstens eine ungesättigte Fettsäure im Gemisch mit Ammoniak umfasst.

Eine bevorzugte Weiterbildung der erfindungsgemäßen Aufgabenlösung sieht vor, dass die Anmischflüssigkeit wenigstens ein organisches Lösungsmittel, insbesondere einen Alkohol, vorzugsweise Isopropanol enthält.

Weiterhin ist besonders bevorzugt, dass die Anmischflüssigkeit ein Natriumpolyphosphat, insbesondere Graham'sches Salz enthält.

Als ungesättigte Fettsäure kommt erfindungsgemäß beispielsweise die Verwendung von Ölsäure in Betracht. Als beispielhaftes Lösungsmittel hat sich insbesondere die Verwendung eines Lösungsmittelgemischs Isopropanol-Wasser als vorteilhaft erwiesen.

Die Gelbildung ist für das Quellen der Einbettmasse im Stadium des Abbindens von Bedeutung. Welche Komponente(n) schließlich die Gelbildung verursacht(en), ist nicht eindeutig geklärt. Möglicherweise wirken mehrere oder alle Komponenten zusammen und verursachen die Gelbildung. Die Untersuchungen der Erfinder zeigen, dass mehrere Komponenten (beispielsweise Polyphosphat + Isopropanol + Ölsäure + Ammoniak + Wasser) am Quellungsprozess beteiligt sein können. Es wurde die Wirkung eines Polyphosphat mit einem Optimum, die Wirkung von Ammoniak in verschiedenen Konzentrationen und die Wirkung von Isopropanol/Ölsäure in verschiedenen Verdünnungen untersucht. Die Kolloide gehen in einem Verdichtungsvorgang (Koagulation) in Gele über.

Die Unterscheidung der Stoffe in Kolloidbildner und Gelbildner kann nicht immer eindeutig erfolgen. Man kann beispielsweise eine kolloidale Lösung in ein Gel umwandeln und das meist irreversibel. Es können sich aber auch direkt Gelstrukturen durch chemische Fällungsreaktionen bilden. Die Bildung kristalliner Strukturen kann durch Additive gemäß der Erfindung behindert werden.

Eine bevorzugte Variante des erfindungsgemäßen Verfahrens sieht vor, dass man Keramikpartikelmischung und Bindemittel mit der Anmischflüssigkeit in Form eines Konzentrats anmischt, welches man mit Wasser verdünnt.

Eine weitere bevorzugte Variante des Verfahrens gemäß der vorliegenden Erfindung sieht vor, dass man die Abbindeexpansion der keramischen Einbettmasse über die Verdünnung eines Konzentrats der Anmischflüssigkeit mit Wasser steuert und/oder dass man die Abbindeexpansion der keramischen Einbettmasse über die Konzentration des Alkalipolyphosphats in der Anmischflüssigkeit steuert.

Auch ist es gemäß einer möglichen bevorzugten Variante des Verfahrens vorteilhaft, wenn man die Abbindeexpansion der keramischen Einbettmasse über die Konzentration des organischen Lösungsmittels in der Anmischflüssigkeit, insbesondere des als Lösungsmittel vorgesehenen Alkohols, insbesondere Isopropanols steuert.

Gegenstand der vorliegenden Erfindung ist weiterhin ein Verfahren zur Herstellung von filigranen Präzisionsgussteilen, insbesondere für Anwendungen in der Medizintechnik, welches dadurch gekennzeichnet ist, dass man diese durch Einfüllen eines Gusswerkstoffs in eine Gießform herstellt, welche aus einer keramischen Einbettmasse gemäß einem der Ansprüche 1 bis 7 hergestellt wurde oder aus einer nach einem Verfahren gemäß einem der Ansprüche 8 bis 13 erhaltenen keramischen Einbettmasse hergestellt wurde.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:

**Figur 1:** eine schematische Darstellung der Spaltgeometrien einer Kronenkonstruktion in der Dentaltechnik und zahnärztlichen Prothetik. Die Herstellung erfolgt durch Präzisionsgusstechnik mit sog. Nicht-Edel-Metall-Legierungen (NEM-Legierungen) wie z. B. mit CoCrMo-, NiCrMo-, CoCrMoW-Basislegierungen oder Edelmetall-Legierungen wie AgPd-, Au-Basislegierungen, oder mit keramischen Werkstoffen wie z. B. Glaskeramiken;

**Figur 2:** die differentielle Thermogravimetrie (DTG) einer abgebundenen phosphatgebundenen Einbettmasse umfassend 200g Keramik-2, angemischt mit wässriger Kieselsol-Lösung, 42 mL 30 %iger wässriger Kieselsol-Lösung, Aushärtungszeit 2 h;

**Figur 3:** die differentielle Thermogravimetrie (DTG) von kristallinem $Mg(NH_4)PO_4 \cdot 6H_2O$ / Struvit, eingesetzte Masse 200g, Vergleich mit abgebundenen Einbettmassen zur Identifizierung des Bindemittels durch thermische Zersetzung;

**Figur 4:** die differentielle Thermogravimetrie (DTG) einer abgebundenen phosphatgebundenen Einbettmasse, 200 g Keramik-2, angemischt mit erfindungsgemäßer Anmischflüssigkeit, 46 mL Anmischflüssigkeit, Herstellung aus Konzentrat-1 verdünnt auf 87 Vol-%, Aushärtungszeit 2 h;

**Figur 5:** den zeitlichen Verlauf der Abbindeexpansion $\Delta l/l_0 \cdot 100$ (Kinetik des Quellvorganges) mit einer erfindungsgemäßen Anmischflüssigkeit umfassend 200 g Keramik-1, angemischt mit 45 mL verdünntem Liquid: 36 mL Konzentrat-1 + 9 mL $H_2O$, Verdünnung des Konzentrats auf 80 Vol-%;

**Figur 6:** den Einfluß der Verdünnung des Konzentrats-5 auf die Abbindeexpansion, $\Delta l/l_0 \cdot 100$, 200 g Keramik-2 angemischt mit 45 mL verdünntem Konzentrat-5 (Verdünnungsreihen von 56 bis 100 Vol-%), Steuerung der Abbindeexpansion durch Verdünnen für verschiedene Anwendungsfälle, Serien A, B und C unter gleichen Bedingungen: Zuverlässigkeitstest, **N**icht-**E**del-**M**etalllegierungen und Gold-Basislegierungen;

**Figur 7:** den Einfluss der Verdünnung des Konzentrates-2 mit drei verschiedenen Natriumpolyphosphat-Konzentrationen (angegebene Konzentration im Konzentrat-2/Parameter) auf die Abbindeexpansion $\Delta l/l_0 \cdot 100$, 200 g Keramik-2 jeweils angemischt mit 45 mL verdünntem Konzentrat, Verdünnungsreihe von 44 bis 100 Vol-% zur Steuerung der Abbindeexpansion;

**Figur 8:** Wirkung und Einfluss der Natriumpolyphosphatkonzentration auf die Abbindeexpansion, $\Delta l/l_0 \cdot 100$, 200 g Keramik-2 jeweils mit 45 mL 66,7 Vol-% iger verdünnter Konzentratlösung angemischt unter Verwendung verschiedener Konzentrate (angegebener Parameter).

Zunächst wird auf die Figur 1 Bezug genommen. Diese zeigt eine schematische Darstellung der Spaltgeometrien einer Kronenkonstruktion in der Dentaltechnik und zahnärztlichen Prothetik. Die Herstellung einer Krone erfolgt durch Präzisionsgusstechnik mit sog. Nicht-Edel-Metall-Legierungen (NEM-Legierungen) wie z. B. mit CoCrMo-, NiCrMo-, CoCrMoW-Basislegierungen oder Edelmetall-Legierungen wie AgPd-, Au-Basislegierungen, oder mit keramischen Werkstoffen wie z. B. Glaskeramiken.

Die Darstellung verdeutlicht die hohen Anforderungen an die Präzisionsgusstechnik in der zahnärztlichen Prothetik. Es müssen insbesondere enge maßliche Toleranzen eingehalten werden nach folgender Massgabe:

Klinischer Randspalt a < 20 μm

Lichte Spaltweiten zwischen Zahnstumpf und Metallkrone b, c = 1 μm bis maximal 20 μm
Mittlere Rauhtiefe im Inneren der Krone $R_t$ < 3 μm.

Nachfolgend wird die Bedeutung der Verwendung der erfindungsgemäßen Anmischflüsigkeit für die Herstellung einer Keramikmischung für die keramische Einbettmasse anhand von Beispielen erläutert. Die Erfindung basiert auf umfassenden Untersuchungen, die ein geeignetes Lösungsmittel und zwei Additive umfassten, die eine Gelbildung des Phosphates herbeiführten.
Der Bereich für die Zusammensetzung der Anmischflüssigkeit ist in der **Tabelle 2** enthalten: Mischung aus Ammoniak-Ölsäure-Isopropanol-Wasser mit darin aufgelöstem Natriumpolyphosphat (=Graham'sches Salz).

Die **Tabelle 1** enthält Beispiele für die Zusammensetzung der Keramikmischungen, mit denen die Wirkung der erfindungsgemäßen Anmischflüssigkeit festgestellt wurde.
Zusammenfassend lässt sich die Zusammensetzung der Anmischflüssigkeit wie folgt beschreiben:

a) Die technische Ölsäure mit Ammoniak zusammen ergibt Ammoniumoleat: Kolloidbildner und Gelbildner (Tensid).
b) Die Bestandteile a) sind in Isopropanol gelöst. Isopropanol erniedrigt die Dielektrizitätskonstante und erniedrigt Ionenaktivitäten und fördert die Gelbildung. Isopropanol vermindert den schnellen Anstieg der Reaktion und begrenzt den Temperaturanstieg (dämpft das Temperaturniveau unter 80 °C), so dass die Kristallgeschwindigkeit zu kristallinen Phosphaten drastisch verringert wird und die Gelbildung gefördert wird.
c) Das Grahm'sche Salz (Polyphosphat) fördert die Dispergierbarkeit der Keramikpartikel und sorgt für eine gleichmäßige Partikelbenetzung. Das Polyphosphat löst sich in der Isopropanol-Wassermischung auf. Die max. Löslichkeit bei 25 °C des Graham'schen Salzes in 25 Vol-% Isopropanol + 75 Vol-% $H_2O$ liegt bei rd. 20 g/L. Sie nimmt mit sinkendem Isopropanolgehalt zu.

Figur 2 zeigt die Differentielle Thermogravimetrie (DTG) einer abgebundenen phosphatgebundenen Einbettmasse umfassend 200g Keramik-2, angemischt mit wässriger Kieselsol-Lösung, 42 mL 30 %iger wässriger Kieselsol-Lösung, bei einer Aushärtungszeit von 2 h.

In **Figur 3** ist das Ergebnis einer differentiellen Thermogravimetrie (DTG) einer abgebundenen phosphatgebundenen Einbettmasse dargestellt, angemischt mit einer erfindungsgemäßen Anmischflüssigkeit. Erkennbar ist, dass sich auch hier keine kristallinen Binderbestandteile des Magnesium-ammonium-phosphats $Mg(NH_4)PO_4 \cdot 6H_2O$ (Struvit) gebildet haben. Durch hochauflösende infrarotspektroskopische Messungen (FTIR) konnte nachgewiesen werden, dass der Binder kein kristallines $Mg(OH)_2$ (=Brucit) enthält. Das Binderverhalten war ähnlich wie bei der Verwendung von Kieselsäuresollösung Allerdings liegt die Zersetzungstemperatur in Höhe von 248 °C etwas höher. Die Abbindetemperatur und der Temperaturverlauf waren nahezu identisch mit den kieselsäurehaltigen Anmischflüssigkeiten. Das Temperaturmaximum lag nach rd. 15 min Reaktionszeit bei 80 °C. Die etwas erhöhte Zersetzungstemperatur ist auf die Bildung des reinen amorphen Magnesium-Phosphatgels zurückzuführen. Die Zersetzung ähnelt der komplexen Zersetzung eines Hydromagnesit-phosphat-Gels.

## (F) Beispiele

### *Beispiel 1*

In **Figur 5** wird der zeitliche Verlauf der Abbindeexpansion mit einer erfindungsgemäßen Anmischflüssigkeit gezeigt: 200 g der Keramik-1 (siehe **Tabelle 1**) wurden mit 45 mL verdünntem Liquid: 36 mL Konzentrat-1 + 9 mL $H_2O$ angemischt (Zusammensetzung von Konzentrat-1 siehe **Tabelle 2,** Verdünnung des Konzentrats auf 80 Vol-%). Nach rd. 1 h wird eine Abbindeexpansion von + 2,6 % und nach 2 h wird nahezu der Endwert in Höhe von rd. +3 % Abbindeexpansion erreicht.

Diese Abbindexpansionswerte des auf 80 % mit Wasser verdünnten Konzentrates (bezogen auf die Keramik-1) war ausreichend für die Herstellung von Kronen- und Brücken aus CoCr28Mo5-Legierungen oder auch NEM-Legierungen (Nicht-Edel-Metalllegierungen, Ersatz für Edelmetalllegierungen), insbesondere für die kohlenstoffarmen Legierungen CoCr28Mo5, CoCr25Mo5W5 und NiCr26Mo5-Dentallegierungen mit C-Gehalten unter 0,1 %.

Die Spaltgeometrie für eine Krone gemäß den Anforderungen (siehe Darstellung **Figur 1**) wird erzielt. Die hohlen Präzisionsgussteile für Kronen besaßen Geometrien zwischen 0,5 cm bis 1,5 cm und Wandstärken zwischen 0,2 mm bis 1 mm. Die Oberflächenrauhigkeit lag unter $R_t$ < 3 μm..

### *Beispiel 2*

Die Steuerbarkeit der Abbindeexpansion durch die Verdünnung des Konzentrats-5 auf die Abbindeexpansion, $\Delta l/l_0 \cdot 100$, 200 g Keramik-2 angemischt mit 45 mL verdünntem Konzentrat-5 (Verdünnungsreihen von 56 bis 100 Vol-%) für die beiden Anwendungsfälle "Herstellung von Gussteilen für Kronen- und Brücken und Modellguß" lässt sich mit einem Konzentrat (hier Konzentrat-5) durchführen. Die erzielten Abbindeexpansionswerte sind in der **Figur 6** für die Keramik-2 dargestellt worden. Die Abbindeexpansionswerte sind für die Anwendungen gut reproduzierbar: siehe Darstellung der Serien A, B und C in **Figur 6** unter gleichen Bedingungen (hohe Zuverlässigkeit).
Die Gießversuche beziehen sich auf nichtedelmetallhaltige Legierungen des Typs CoCr28Mo5, CoCr25Mo5W5 und NiCr26Mo5, deren Liquidusbereiche zwischen 1300 und 1450 °C liegen.
Die Gießform-Vorwärmetemperatur lag bei 850 °C. Die Oberflächenrauhigkeit lag unter $R_t < 3$ μm. Die höchsten Anforderungen stellt die Kronen- und Brückengießtechnik, die in ähnlicher Weise wie beim Beispiel 1 gelang.

***Beispiel 3***

**Figur 7** zeigt den Einfluss der Verdünnung des Konzentrates-2 mit drei verschiedenen Natriumpolyphosphat-Konzentrationen (angegebene Konzentration im Konzentrat-2/Parameter) auf die Abbindeexpansion $\Delta l/l_0 \cdot 100$, 200 g Keramik-2 jeweils angemischt mit 45 mL verdünntem Konzentrat (Verdünnungsreihe zur Steuerung der Abbindeexpansion von 44 bis 100 Vol-%). Erkennbar ist der Einfluss der Natriumpolyphosphat-Konzentration auf die Abbindeexpansion.
Durch die Wahl der Natriumpolyphosphat-Konzentration und der Verdünnung der Konzentrate lassen sich alle Fälle der Abbindeexpansion für Gießtechniken mit Dentallegierungen abdecken.
Dadurch gewinnt man ein Höchstmaß an "Freiheitsgraden" für die sehr unterschiedlichen Anwendungsfälle "Gussteile für die Kronen- und Brückentechnik und Modellgussteile" mit sehr unterschiedlichen Dentallegierungen für Prothetikteile.

***Beispiel 4***

Auch ist der Gehalt an Isopropanol in den Konzentraten von großer Bedeutung für die Abbindeexpansion. Dies zeigt die **Figur 8** in Verbindung mit der **Tabelle 2.** Das Konzentrat-3 besitzt einen höheren Isopropanol-Gehalt (siehe **Tabelle 2**). Dementsprechend werden höhere Abbindeexpansionswerte bei der Herstellung der Gießformen erzielt. Gleichzeitig gibt die **Figur 8** die Wirkung und den Einfluss der Natriumpolyphosphatkonzentration auf die Abbindeexpansion an. 200 g Keramik-2, ausreichend für die Herstellung einer Gießform der Dentaltechnik, werden jeweils mit 45 mL 66,7 Vol-% iger verdünnter Konzentratlösung (Konzentrate 3 und 4, siehe **Tabelle 2**) angemischt.
Durch die Wahl der Konzentrate mit unterschiedlichen Konzentrationen der Inhaltsstoffe in der Abbindeflüssigkeit und die Wahl der Verdünnung der Konzentrate lassen sich sehr unterschiedliche Abbindeexpansionen erzielen. Die einzustellenden Abbindeexpansionen richten sich nach der Herstellung der Gusserzeugnisse und der Legierungsart. Durch diese erfindungsgemäße Abbindeflüssigkeit lassen sich alle Wechselfälle der Gießpraxis einstellen.

**Tabelle 1:** Typische Keramikmischungen zur Herstellung von Gussformen in der dentalen Feingusstechnik für die erfindungsgemäßen Anmischflüssigkeiten (siehe **Tabelle 2**)

| **Ausgangsstoffe für die Keramik-Mischungen** | **Bemerkung** | **Konzentrationsbereiche für die Keramik-Mischungen (Gew-%)** | **Beispiel: Keramik-1 Mengenanteil (Gew-%)** | **Beispiel: Keramik-2 Mengenanteil (Gew-%)** |
|---|---|---|---|---|
| Ammoniumdihydrogenphosphat ($NH_4H_2PO_4$) | Wasserlöslichen Binderkomponente; Reaktionpartner für MgO / $H_2O$ | 8 % bis 16 % | 13,0 % | 12,0 % |
| Magnesiumoxid (kaustisches MgO) | Reaktives MgO; Kornfraktionen = 10 μm bis 90 μm; Reaktionspartner für $NH_4H_2PO_4$ / $H_2O$ | 5 % bis 15 % Kornfraktionen = 10 μm bis 90 μm | 6,5 % | 7,0 % |
| Nichtreaktive (inerte) Bestandteile (feuerfeste Füllstoffe): Siliciumdioxid-Modifikationen ($SiO_2$), Silikate, Erdalkali-Aluminate, Zirkon (IV)-Oxide | Feuerfeste Oxid - Mischungen Kornfraktionen = 10 μm bis 200 μm; | Rest: Kornfraktionen = 10 μm bis 200 μm; | Rest | Rest |

**Tabelle 2:** Erfindungsgemäße Beispiele für die Herstellung von Anmischflüssigkeiten (Konzentrate, die mit Wasser verdünnt werden) zur Steuerung der Abbindeexpansion von $MgO/NH_4H_2PO_4$-gebundener Einbettmassen für die Herstellung von präzisen Feingussteilen

| Lfd . Nr. | Ausgangstoffe für die Herstellung der Konzentrate | Konzentrationsbereich für die Konzentrate | Konzentrat-1 (Beispiel 1) | Konzentrate-2 (Beispiel 2) | Konzentrate-3 (Beispiel 3) | Konzentrate-4 (Beispiel 4) | Konzentrat-5 (Bespiel 5) |
|---|---|---|---|---|---|---|---|
| 1 | 2-Propanol (Isopropanol), technische Qualität | 8 bis 25 Vol-% | 16,1 | 16,13 Vol-% | 17,4 Vol-% | 16,1 Vol-% | 17,4 Vol-% |
| 2 | Konzentrierte Ammoniaklösung = ~ 26 bis ~ 24 Gew.-% $NH_3$ | 0,3 bis 3 Vol-% | 1,61 | 1,61 Vol-% | 0,86 Vol-% | 1,64 Vol-% | 0,87 Vol-% |
| 3 | Ölsäure, cis-9-Octadecensäure, $C_{17}H_{33}COOH$, technische Qualität = 62 bis 92 Gew-%, Reste/Nebenbestandteile mit Anteilen von 8 bis maximal 38 Gew-%, Einzelbestandteile (Beispiele): Linolsäure (<5 %), Linolensäure (<20 %), Palmitinsäure (<20 %), Stearinsäure (<8 %), Magarinsäure (<6 %), Myristinsäure (< 6%), Palmitoleinsäure (<10 %) sowie Fettsäuren mit mehr als $C_{18}$ (<5 %), | 1 bis 6 Vol-% | 3,23 | 3,22 Vol-% | 3,44 Vol-% | 3,26 Vol-% | 3,48 Vol-% |
| 4 | Destilliertes Wasser | Flüssigkeitsrestmenge aufgefüllt auf 100 Vol-% | 79,06 | 79,04 Vol-% | 78,3 Vol-% | 79,0 Vol-% | 78,25 Vol-% |

(fortgesetzt)

| Lfd . Nr. | Ausgangstoffe für die Herstellung der Konzentrate | Konzentrationsbereich für die Konzentrate | Konzentrat-1 (Beispiel 1) | Konzentrate-2 (Beispiel 2) | Konzentrate-3 (Beispiel 3) | Konzentrate-4 (Beispiel 4) | Konzentrat-5 (Bespiel 5) |
|---|---|---|---|---|---|---|---|
| 5 | Natriumpolyphosphat (Graham'sches Salz) $(NaPO_3)_{12-13} \cdot Na_2O$, $P_2O_5$-Gehalt 65 bis 71 Gew.-%, auch als Natriumhexametaphosphat bezeichnet, aufgelöst in der Flüssigkeitsmischung : siehe Ifd. Nr. 1 bis 4: 2-Propanol-Ammoniaklösung-Ölsäure-$H_2O$ | 0 bis 30 g/L | 19,4 | a) 0 g/L<br>b) 9,7 g/L<br>c) 19,4 g/L | 0 bis 25 g/L ansteigend in Schritten von ~ 2.5 g/L | 0 bis 25 g/L ansteigend in Schritten von ~ 2,5 g/L | 22,8 g/L |

**Patentansprüche**

1. Keramische Einbettmasse zur Herstellung einer Gießform, die zur Kompensation der Volumenkontraktion eines in die Gießform einzufüllenden Gusswerkstoffs eine Abbindeexpansion aufweist, hergestellt aus einer Keramikpartikelmischung, einem Bindemittel und einer Anmischflüssigkeit,
**dadurch gekennzeichnet, dass** die Anmischflüssigkeit wenigstens einen Kolloidbildner und/oder Gelbildner, ein Lösungsmittel, sowie wenigstens ein Alkalipolyphosphat enthält.

2. Keramische Einbettmasse nach Anspruch 1, **dadurch gekennzeichnet, dass** diese als Kolloidbildner und/oder Gelbildner wenigstens eine ungesättigte Fettsäure enthält.

3. Keramische Einbettmasse nach Anspruch 2, **dadurch gekennzeichnet, dass** diese als Kolloidbildner und/oder Gelbildner wenigstens eine ungesättigte Fettsäure im Gemisch mit Ammoniak umfasst.

4. Keramische Einbettmasse nach einem der Ansprüche 1 bis 3, **dadurch gekennzeichnet, dass** die Anmischflüssigkeit wenigstens ein organisches Lösungsmittel, insbesondere einen Alkohol, vorzugsweise Isopropanol enthält.

5. Keramische Einbettmasse nach einem der Ansprüche 1 bis 4, **dadurch gekennzeichnet, dass** die Anmischflüssigkeit ein Natriumpolyphosphat, insbesondere Graham'sches Salz enthält.

6. Keramische Einbettmasse nach einem der Ansprüche 1 bis 5, **dadurch gekennzeichnet, dass** die Anmischflüssigkeit als ungesättigte Fettsäure Ölsäure enthält.

7. Keramische Einbettmasse nach einem der Ansprüche 1 bis 6, **dadurch gekennzeichnet, dass** die Anmischflüssigkeit als Lösungsmittel ein Isopropanol-Wasser-Gemisch umfasst.

8. Verfahren zur Herstellung einer keramischen Einbettmasse für die Herstellung einer Gießform, die zur Kompensation der Volumenkontraktion eines in die Gießform einzufüllenden Gusswerkstoffs eine Abbindeexpansion aufweist, bei dem man einen Einbettmassebrei aus einer Keramikpartikelmischung, einem Bindemittel und einer Anmischflüssigkeit anrührt, abbinden lässt und anschließend erwärmt, um die Gießform zu erhalten, **dadurch gekennzeichnet, dass** man eine Anmischflüssigkeit verwendet, die wenigstens einen Kolloidbildner und/oder Gelbildner, ein Lösungsmittel, sowie wenigstens ein Alkalipolyphosphat enthält.

9. Verfahren nach Anspruch 8, **dadurch gekennzeichnet, dass** man eine Anmischflüssigkeit mit den Merkmalen eines der Ansprüche 1 bis 7 verwendet.

10. Verfahren nach Anspruch 8 oder 9, **dadurch gekennzeichnet, dass** man Keramikpartikelmischung und Bindemittel mit der Anmischflüssigkeit in Form eines Konzentrats anmischt, welches man mit Wasser verdünnt.

11. Verfahren nach Anspruch 10, **dadurch gekennzeichnet, dass** man die Abbindeexpansion der keramischen Einbettmasse über die Verdünnung eines Konzentrats der Anmischflüssigkeit mit Wasser steuert.

12. Verfahren nach einem der Ansprüche 8 bis 11, **dadurch gekennzeichnet, dass** man die Abbindeexpansion der keramischen Einbettmasse über die Konzentration des Alkalipolyphosphats in der Anmischflüssigkeit steuert.

13. Verfahren nach einem der Ansprüche 8 bis 11, **dadurch gekennzeichnet, dass** man die Abbindeexpansion der keramischen Einbettmasse über die Konzentration des organischen Lösungsmittels in der Anmischflüssigkeit, insbesondere des als Lösungsmittel vorgesehenen Alkohols, insbesondere Isopropanols steuert.

14. Verfahren zur Herstellung von filigranen Präzisionsgussteilen, insbesondere für Anwendungen in der Medizintechnik, **dadurch gekennzeichnet, dass** man diese durch Einfüllen eines Gusswerkstoffs in eine Gießform herstellt, welche aus einer keramischen Einbettmasse gemäß einem der Ansprüche 1 bis 7 hergestellt wurde oder aus einer nach einem Verfahren gemäß einem der Ansprüche 8 bis 13 erhaltenen keramischen Einbettmasse hergestellt wurde.

15. Verfahren zur Herstellung einer Gießform, **dadurch gekennzeichnet, dass** diese unter Verwendung einer keramischen Einbettmasse hergestellt wird, die mittels einer Anmischflüssigkeit gemäß einem der Ansprüche 1 bis 7 gewonnen wurde.

## Claims

1. A ceramic embedding compound for manufacturing a casting mould, said compound comprising a setting expansion for compensating the volume contraction of a casting material to be filled into the casting mould, made from a mixture of ceramic particles, a binding agent and a mixing liquid,
**characterized in that** said mixing liquid contains at least one colloid-forming agent and/or one gel-forming agent, one solvent as well as at least one alkali polyphosphate.

2. The ceramic embedding compound as set forth in claim 1, **characterized in that** it contains at least one unsaturated fatty acid as the colloid-forming agent and/or the gel-forming agent.

3. The ceramic embedding compound as set forth in claim 2, **characterized in that** it incorporates at least one unsaturated fatty acid as the colloid-forming agent and/or the gel-forming agent in the mixture with ammoniac.

4. The ceramic embedding compound as set forth in any one of the claims 1 through 3, **characterized in that** the mixing liquid contains at least one organic solvent, in particular an alcohol, preferably isopropanol.

5. The ceramic embedding compound as set forth in any one of the claims 1 through 4, **characterized in that** the mixing liquid contains a sodium polyphosphate, in particular Graham's salt.

6. The ceramic embedding compound as set forth in any one of the claims 1 through 5, **characterized in that** the mixing liquid contains oleic acid as the unsaturated fatty acid.

7. The ceramic embedding compound as set forth in any one of the claims 1 through 6, **characterized in that** the mixing liquid includes an isopropanol-water mixture as the solvent.

8. A method of producing a ceramic embedding compound for manufacturing a casting mould, said compound comprising a setting expansion for compensating the volume contraction of a casting material to be filled into the casting mould, wherein one mixes an embedding compound slurry from a ceramic particle mixture, a binding agent and a mixing liquid, one leaves it to harden and then one heats it in order to obtain the casting mould, **characterized in that** one uses a mixing liquid that contains at least one colloid-forming agent and/or gel-forming agent, one solvent as well as at least one alkali polyphosphate.

9. The method as set forth in claim 8, **characterized in that** one uses a mixing liquid having the features of one of the claims 1 through 7.

10. The method as set forth in claim 8 or 9, **characterized in that** one mixes the mixture of ceramic particles and the binding agent with the mixing liquid in the form of a concentrate, which one dilutes with water.

11. The method as set forth in claim 10, **characterized in that** one controls the setting expansion of the ceramic embedding compound through the dilution of a concentrate of the mixing liquid with water.

12. The method as set forth in any one of the claims 8 through 11, **characterized in that** one controls the setting expansion of the ceramic embedding compound through the concentration of the alkali polyphosphate in the mixing liquid.

13. The method as set forth in any one of the claims 8 through 11, **characterized in that** one controls the setting expansion of the ceramic embedding compound through the concentration of the organic solvent in the mixing liquid, in particular of the alcohol provided as the solvent, in particular isopropanol.

14. A method of manufacturing delicate precision casting parts, in particular for use in medical engineering, **characterized in that** one makes them by filling a casting material into a casting mould manufactured from a ceramic embedding compound as set forth in any one of the claims 1 through 7 or from a ceramic embedding compound obtained according to a method as set forth in any one of the claims 8 through 13.

15. A method of manufacturing a casting mould, **characterized in that** it is made using a ceramic embedding compound obtained by means of a mixing liquid as set forth in any one of the claims 1 through 7.

## Revendications

1. Masse céramique d'enrobement destinée à la fabrication d'un moule qui, pour compenser la contraction volumique d'un matériau destiné à être coulé dans le moule, comporte une expansion de durcissement, réalisée à partir d'un mélange de particules céramique, d'un liant et d'un liquide de gâchage,
**caractérisée en ce que** le liquide de gâchage contient au moins un agent formant un colloïde, et/ou un gélifiant, un solvant, ainsi qu'au moins un alkali polyphosphate.

2. Masse céramique d'enrobement selon la revendication 1, **caractérisée en ce que** celle-ci contient au moins un acide gras insaturé en guise d'agent formant un colloïde et/ou de gélifiant.

3. Masse céramique d'enrobement selon la revendication 2, **caractérisée en ce que** celle-ci comprend dans le mélange avec de l'ammoniaque au moins un acide gras insaturé en guise d'agent formant un colloïde et/ou de gélifiant.

4. Masse céramique d'enrobement selon l'une quelconque des revendications 1 à 3, **caractérisée en ce que** le liquide de gâchage contient au moins un solvant organique, notamment un alcool, de préférence de l'isopropanol.

5. Masse céramique d'enrobement selon l'une quelconque des revendications 1 à 4, **caractérisée en ce que** le liquide de gâchage contient un polyphosphate de sodium, notamment un sel de Graham.

6. Masse céramique d'enrobement selon l'une quelconque des revendications 1 à 5, **caractérisée en ce que** le liquide de gâchage contient de l'acide oléique en guise d'acide gras insaturé.

7. Masse céramique d'enrobement selon l'une quelconque des revendications 1 à 6, **caractérisée en ce que** le liquide de gâchage comprend comme solvant un mélange isopropanol-eau.

8. Procédé de réalisation d'une masse céramique d'enrobement pour la réalisation d'un moule comportant une expansion de durcissement pour compenser la contraction volumique d'un matériau destiné à être coulé dans le moule, suivant lequel on prépare une pâte de masse d'enrobement à partir d'un mélange de particules céramique, d'un liant et d'un liquide de gâchage, on laisse durcir et on chauffe ensuite afin d'obtenir le moule, **caractérisé en ce que** l'on utilise un liquide de gâchage contenant au moins un agent formant un colloïde, et/ou un gélifiant, un solvant ainsi qu'au moins un polyphosphate alcalin.

9. Procédé selon la revendication 8, **caractérisé en ce que** l'on utilise un liquide de gâchage ayant les particularités de l'une quelconque des revendications 1 à 7.

10. Procédé selon la revendication 8 ou 9, **caractérisé en ce que** l'on dilue le mélange de particules de céramique et le liant avec le liquide de gâchage sous forme d'un concentré que l'on dilue avec de l'eau.

11. Procédé selon la revendication 10, **caractérisé en ce que** l'on contrôle l'expansion de durcissement de la masse céramique d'enrobement en diluant un concentré du liquide de gâchage avec de l'eau.

12. Procédé selon l'une quelconque des revendications 8 à 11, **caractérisé en ce que** l'on contrôle l'expansion de durcissement de la masse céramique d'enrobement par la concentration du polyphosphate alcalin dans le liquide de gâchage.

13. Procédé selon l'une quelconque des revendications 8 à 11, **caractérisé en ce que** l'on contrôle l'expansion de durcissement de la masse céramique d'enrobement par la concentration du solvant organique dans le liquide de gâchage, notamment de l'alcool prévu comme solvant, notamment de l'isopropanol.

14. Procédé de réalisation d'objets de précision filigranes moulés, notamment destinés à être utilisés en technique médicale, **caractérisé en ce que** l'on réalise ceux-ci en coulant un matériau dans un moule réalisé à partir d'une masse céramique d'enrobement selon l'une quelconque des revendications 1 à 7 ou à partir d'une masse céramique d'enrobement obtenue selon l'une quelconque des revendications 8 à 13.

15. Procédé de réalisation d'un moule, **caractérisé en ce que** celui-ci est réalisé en utilisant une masse céramique d'enrobement obtenue moyennant un liquide de gâchage selon l'une quelconque des revendications 1 à 7.

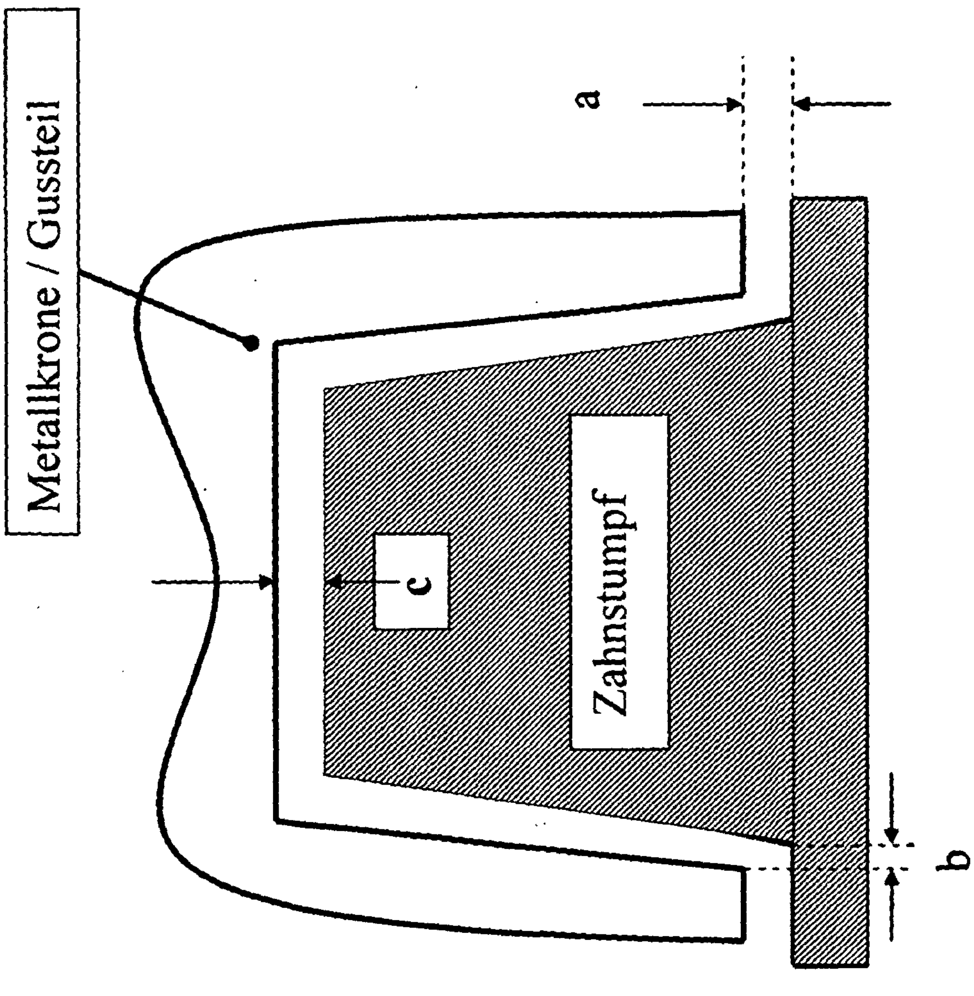


Figur 1:

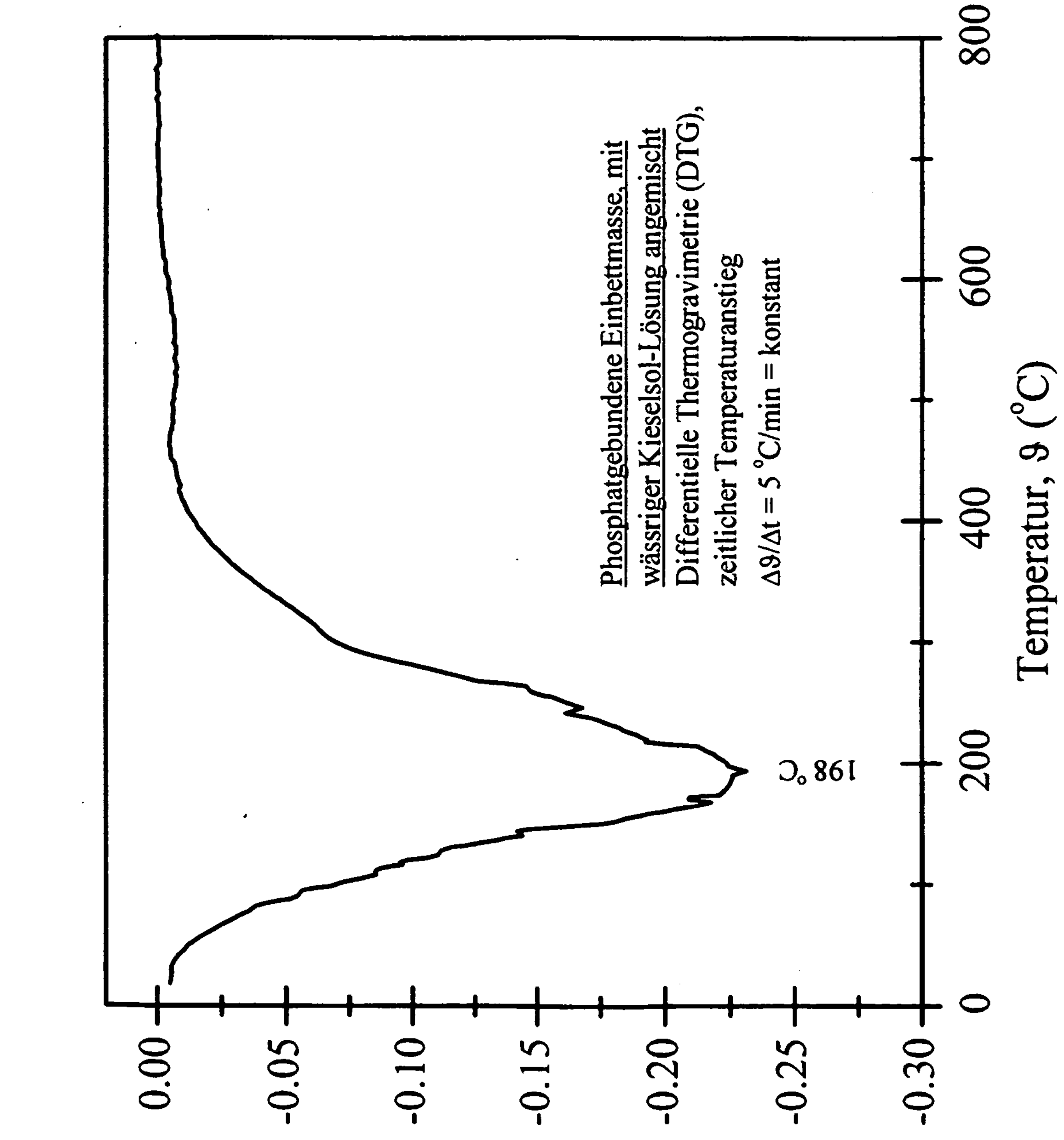
Phosphatgebundene Einbettmasse, mit wässriger Kieselsol-Lösung angemischt
Differentielle Thermogravimetrie (DTG), zeitlicher Temperaturanstieg
Δϑ/Δt = 5 °C/min = konstant
198 °C
Temperatur, ϑ (°C)
0
200
400
600
800
Differentieller Massenverlust, Δm/Δϑ , (g/°C)
0.00
-0.05
-0.10
-0.15
-0.20
-0.25
-0.30

Figur 2

Figur 3:

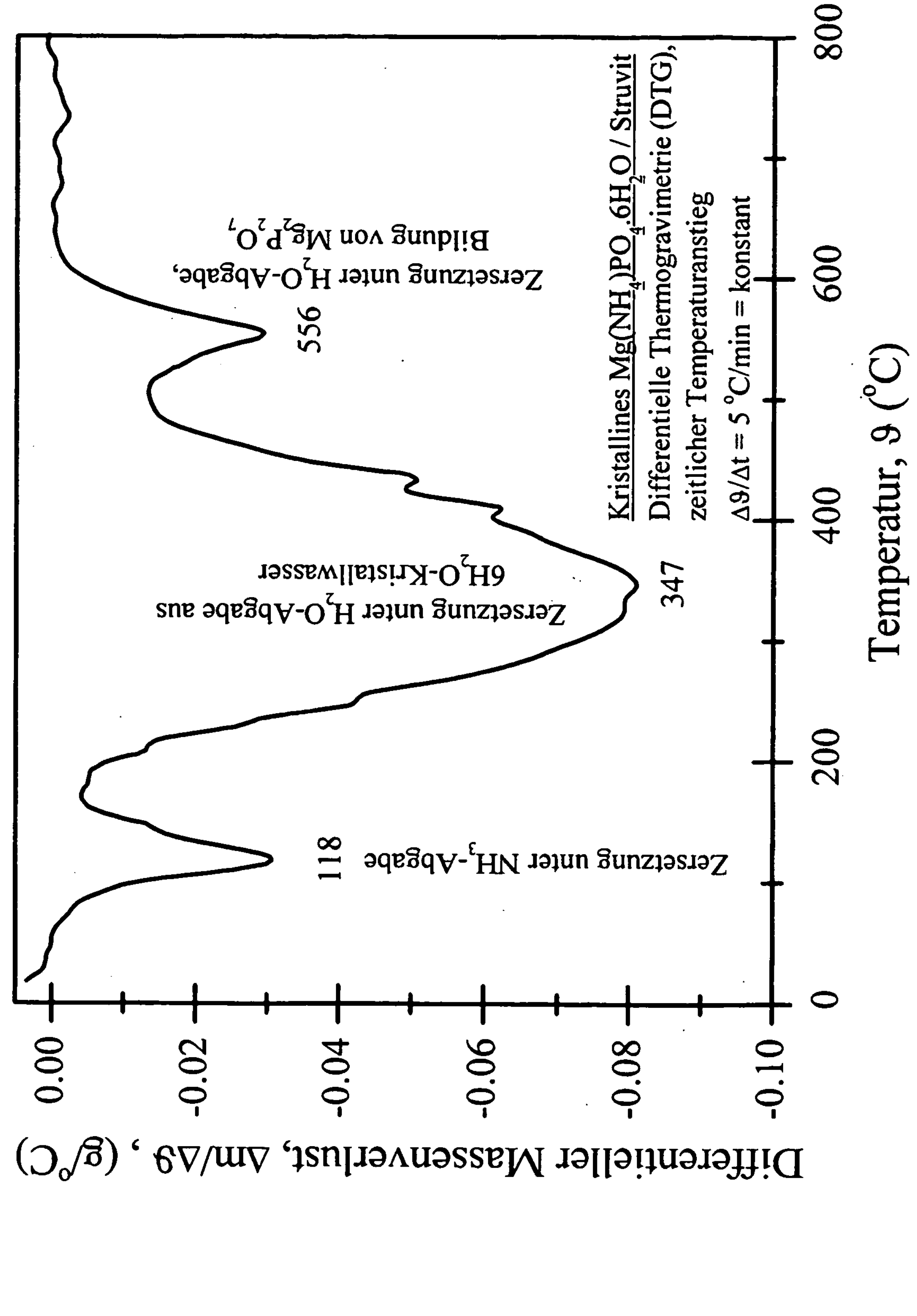
Differentieller Massenverlust, Δm/Δϑ , (g/°C)
0.00
-0.02
-0.04
-0.06
-0.08
-0.10
0
200
400
600
800
Temperatur, ϑ (°C)
118
Zersetzung unter $NH_3$-Abgabe
347
Zersetzung unter $H_2O$-Abgabe aus
$6H_2O$-Kristallwasser
556
Zersetzung unter $H_2O$-Abgabe,
Bildung von $Mg_2P_2O_7$
Kristallines $Mg(NH_4)PO_4{\cdot}6H_2O$ / Struvit
Differentielle Thermogravimetrie (DTG),
zeitlicher Temperaturanstieg
Δϑ/Δt = 5 °C/min = konstant

Figur 4:

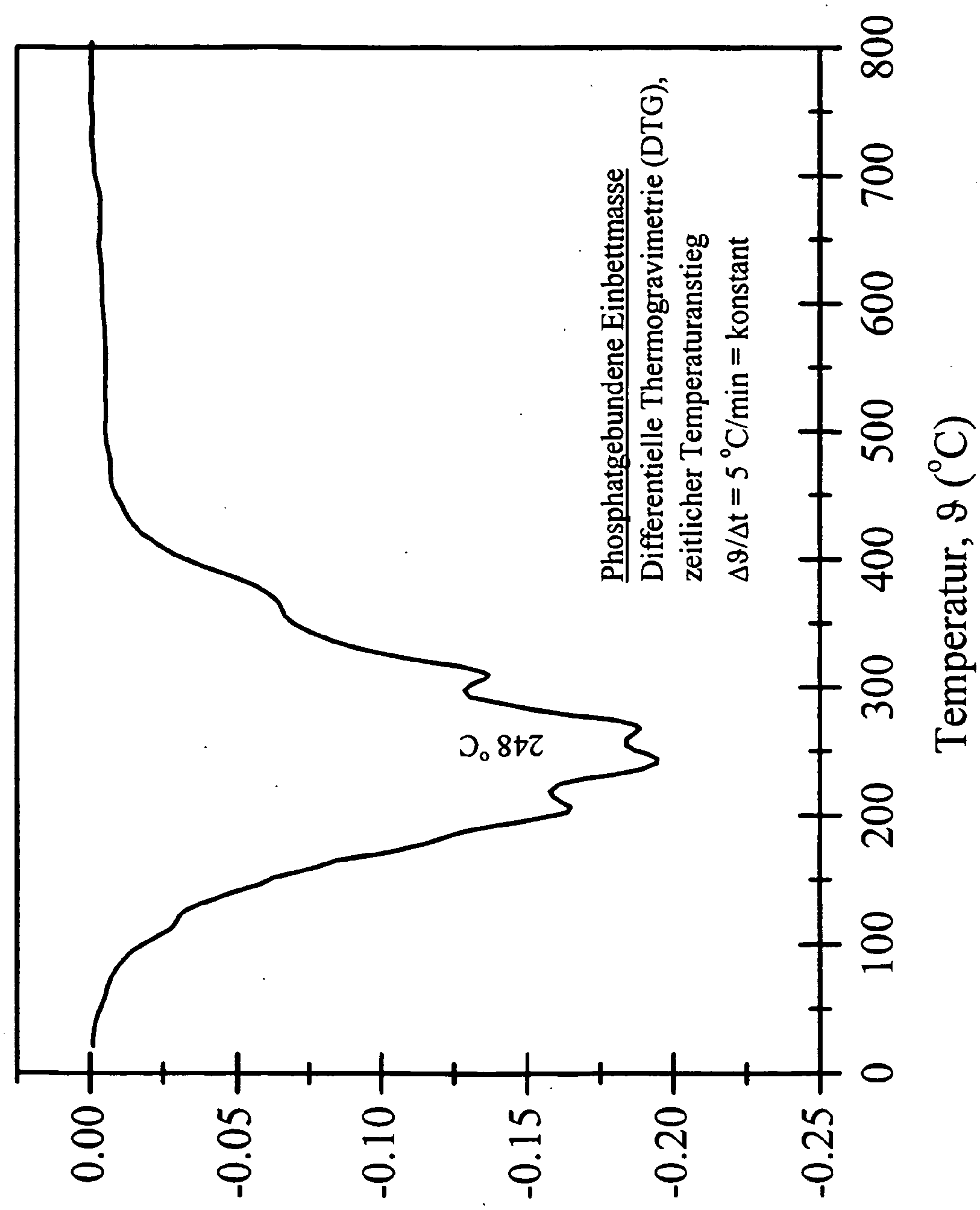
Phosphatgebundene Einbettmasse
Differentielle Thermogravimetrie (DTG),
zeitlicher Temperaturanstieg
Δϑ/Δt = 5 °C/min = konstant
248 °C
Differentieller Massenverlust, Δm/Δϑ , (g/°C)
0.00
-0.05
-0.10
-0.15
-0.20
-0.25
Temperatur, ϑ (°C)
0
100
200
300
400
500
600
700
800

Figur 5:

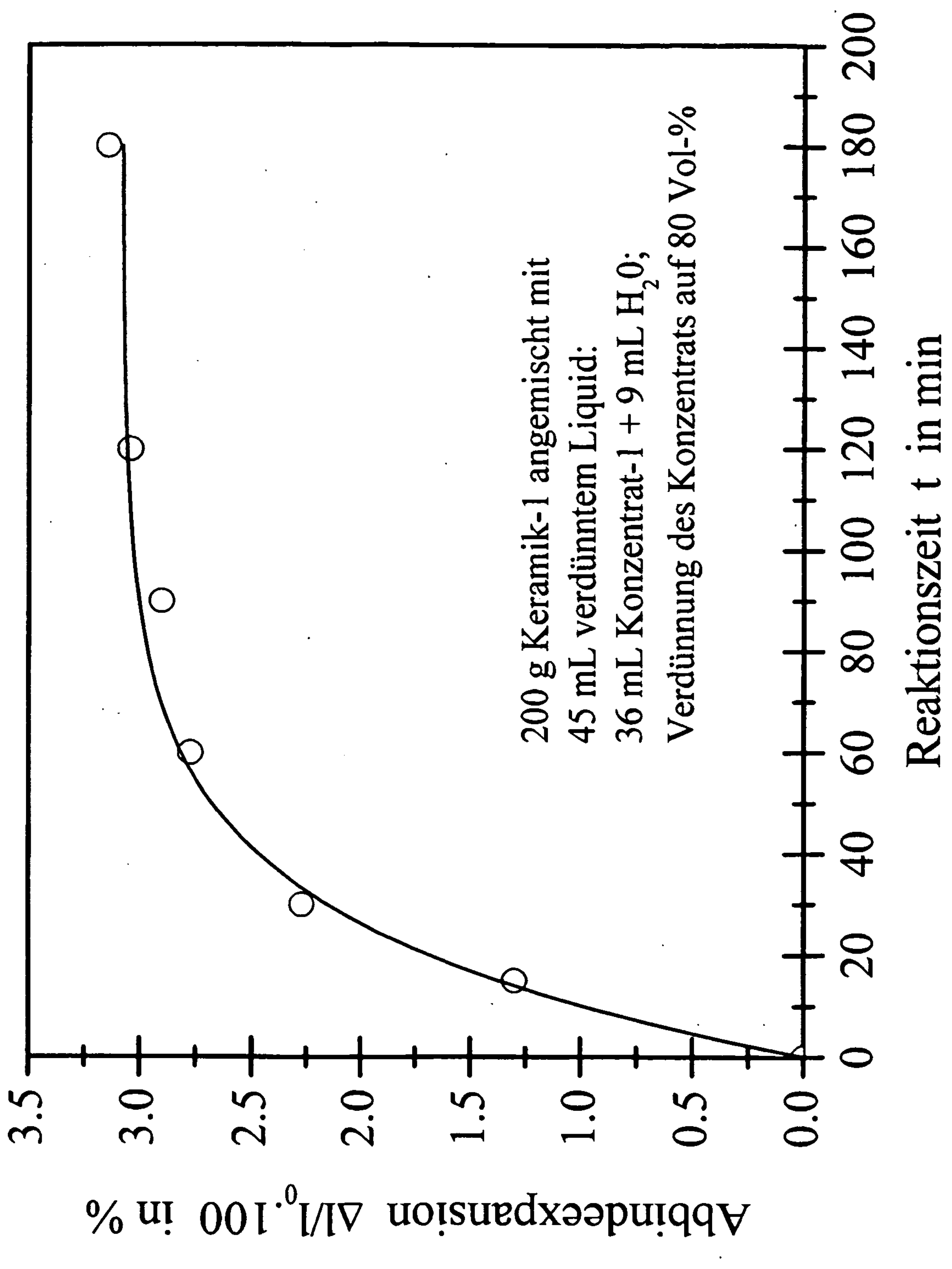
200 g Keramik-1 angemischt mit
45 mL verdünntem Liquid:
36 mL Konzentrat-1 + 9 mL $H_2O$;
Verdünnung des Konzentrats auf 80 Vol-%
Reaktionszeit t in min
0
20
40
60
80
100
120
140
160
180
200
Abbindeexpansion Δl/l₀.100 in %
0.0
0.5
1.0
1.5
2.0
2.5
3.0
3.5

Figur 6:

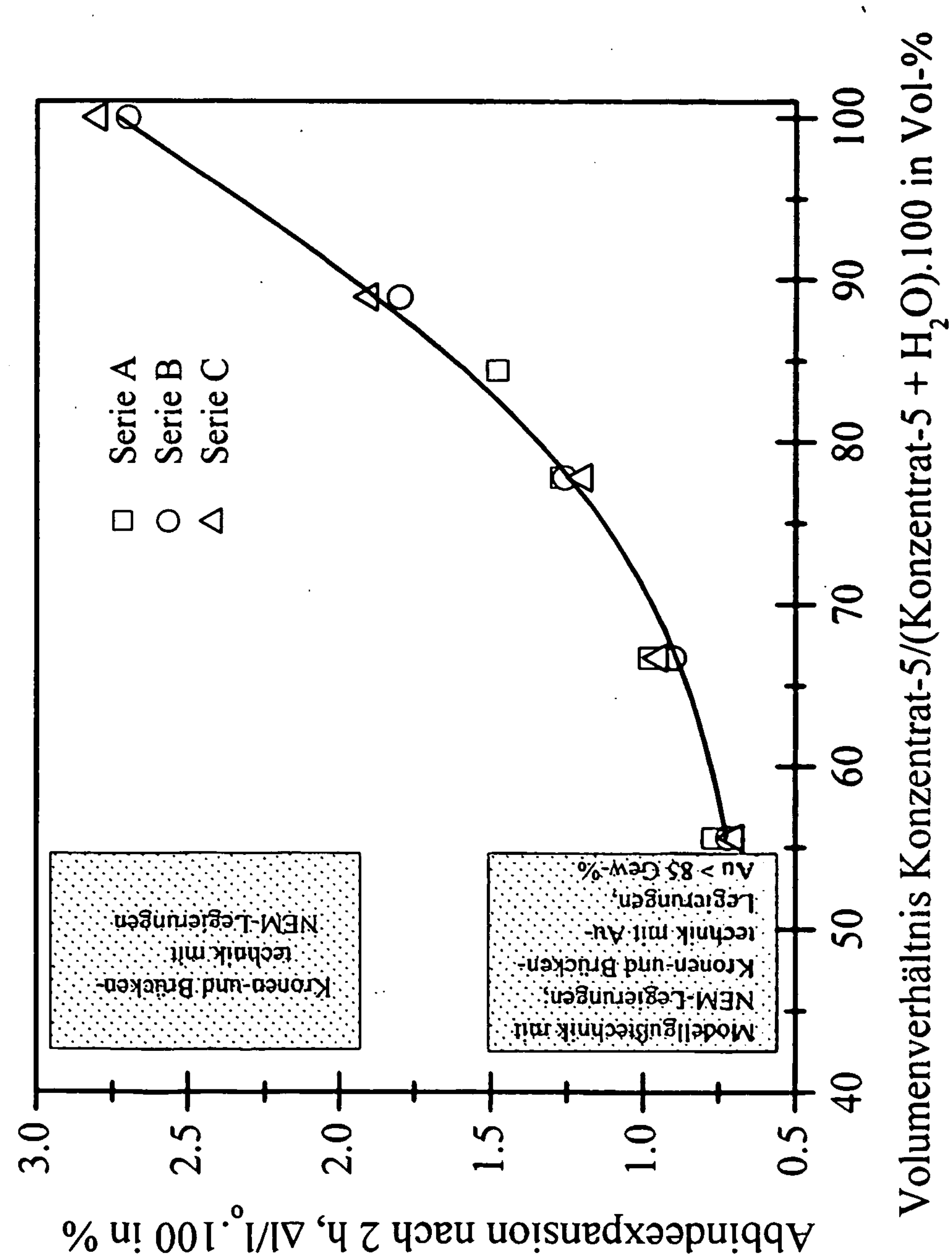
Serie A
Serie B
Serie C
Modellgußtechnik mit NEM-Legierungen; Kronen-und Brücken-technik mit Au-Legierungen, Au > 85 Gew.-%
Kronen-und Brücken-technik mit NEM-Legierungen
3.0
2.5
2.0
1.5
1.0
0.5
40
50
60
70
80
90
100
Abbindeexpansion nach 2 h, Δl/l$_o$.100 in %
Volumenverhältnis Konzentrat-5/(Konzentrat-5 + $H_2O$).100 in Vol-%

Figur 7:

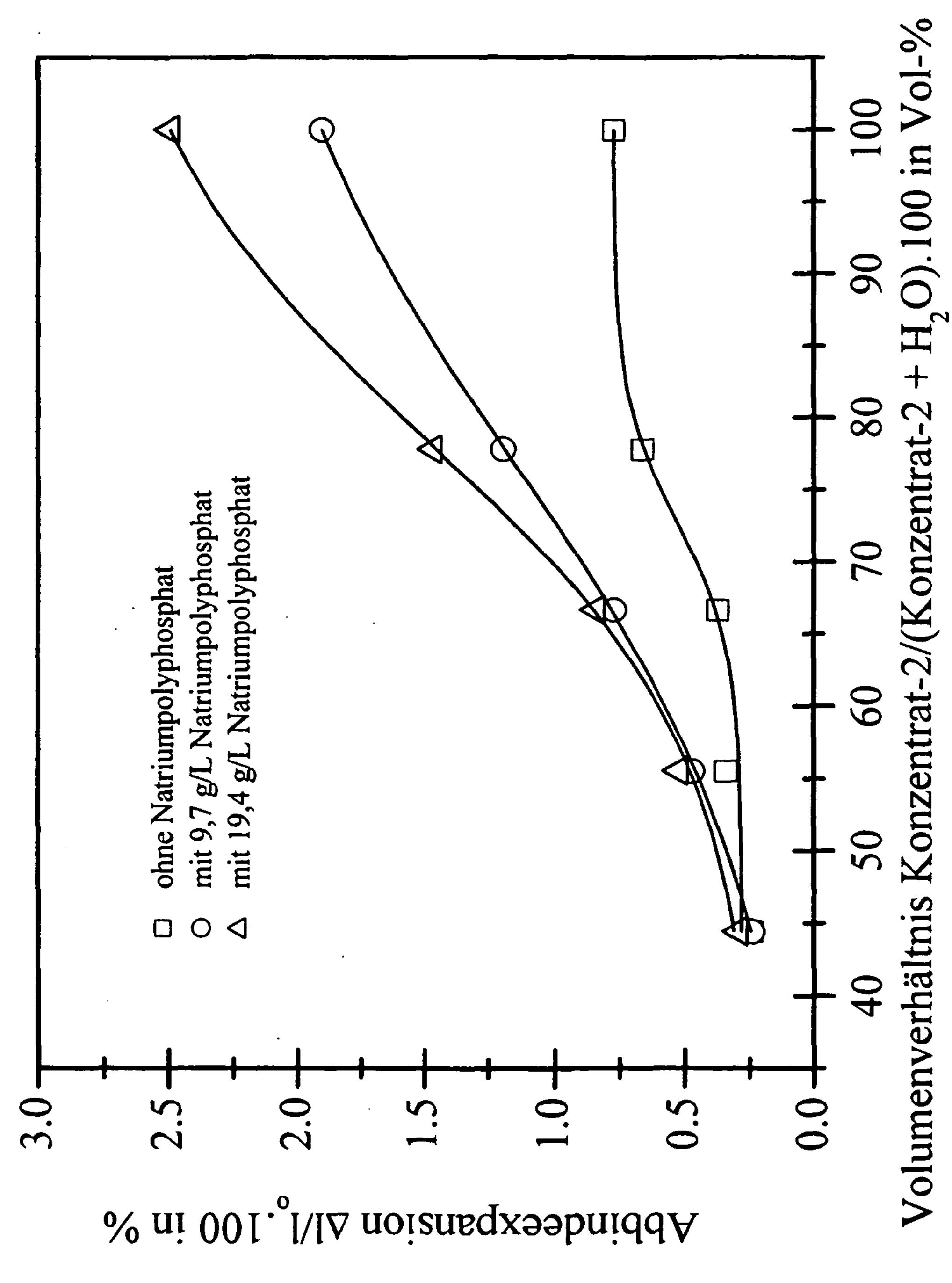
ohne Natriumpolyphosphat
mit 9,7 g/L Natriumpolyphosphat
mit 19,4 g/L Natriumpolyphosphat
Abbindeexpansion Δl/l$_o$.100 in %
0.0
0.5
1.0
1.5
2.0
2.5
3.0
40
50
60
70
80
90
100
Volumenverhältnis Konzentrat-2/(Konzentrat-2 + $H_2O$).100 in Vol-%

Figur 8:

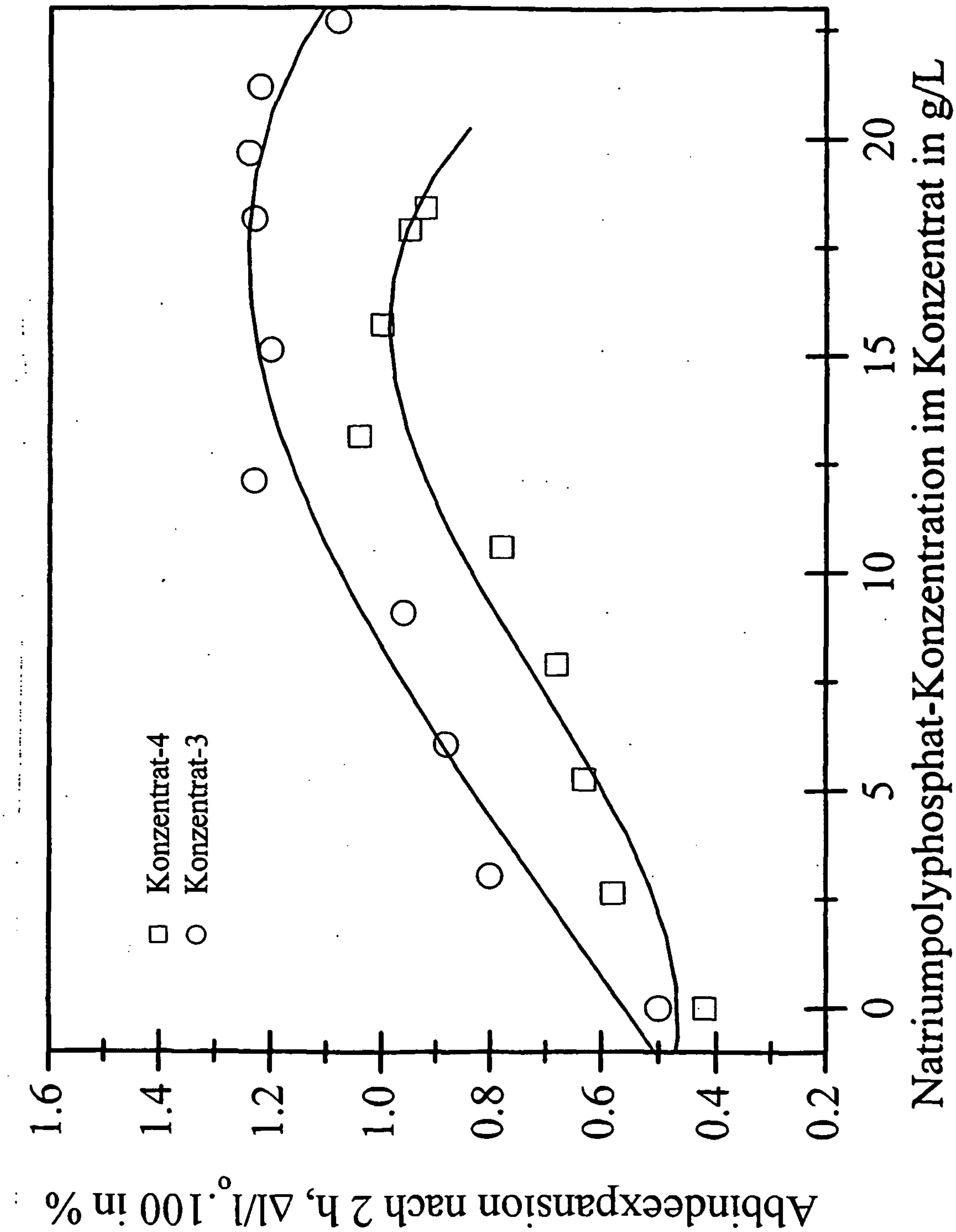
Konzentrat-4
Konzentrat-3
Abbindeexpansion nach 2 h, Δl/l$_o$.100 in %
1.6
1.4
1.2
1.0
0.8
0.6
0.4
0.2
0
5
10
15
20
Natriumpolyphosphat-Konzentration im Konzentrat in g/L